# EUROPÄISCHE PATENTANMELDUNG

(11) **EP 1 057 992 A2**
(43) Veröffentlichungstag der Anmeldung: **06.12.2000**
(21) Anmeldenummer: 00112051.8
(22) Anmeldetag: 02.06.2000
(51) Int. Cl.: F02D 41/30, F02D 41/14, F02P 5/04, F02D 37/02, F02D 41/40

(54) **Verfahren zum Betreiben einer Brennkraftmaschine**

(30) Priorität: 05.06.1999 DE 19925788
(71) Anmelder: ROBERT BOSCH GMBH, 70442 Stuttgart (DE)
(72) Erfinder: Schuster, Thomas, 71573 Allmersbach (DE); Roth, Andreas, 75417 Meuhlacker-Lomersheim (DE); Oder, Michael, 75428 Illingen (DE); Kuesell, Mattial, 71229 Leonberg (DE)

(57) **Zusammenfassung**

Es wird eine Brennkraftmaschine (1) insbesondere für ein Kraftfahrzeug beschrieben, die mit einem Brennraum (4) versehen ist, in den Kraftstoff in einer ersten Betriebsart während einer Ansaugphase oder in einer zweiten Betriebsart während einer Verdichtungsphase direkt einspritzbar und entzündbar ist. Es ist ein Steuergerät (15) vorgesehen zur Ermittlung des Einspritzzeitpunkts und/oder der Zündzeitpunkts des Kraftstoffs in der zweiten Betriebsart in Abhängigkeit von der Drehzahl der Brennkraftmaschine (1) und der in den Brennraum (4) einzuspritzenden Kraftstoffmasse. Durch das Steuergerät (15) wird in der zweiten Betriebsart der Einspritzzeitpunkt und/oder der Zündzeitpunkt in Abhängigkeit von Lambda ermittelt.

## Beschreibung

Die Erfindung betrifft ein Verfahren zum Betreiben einer Brennkraftmaschine insbesondere eines Kraftfahrzeugs, bei dem Kraftstoff in einer ersten Betriebsart während einer Ansaugphase oder in einer zweiten Betriebsart während einer Verdichtungsphase direkt in einen Brennraum eingespritzt und entzündet wird, und bei dem der Einspritzzeitpunkt und/oder der Zündzeitpunkt des Kraftstoffs in der zweiten Betriebsart in Abhängigkeit von der Drehzahl der Brennkraftmaschine und der in den Brennraum einzuspritzenden Kraftstoffmasse ermittelt wird. Ebenfalls betrifft die Erfindung ein Steuergerät für eine Brennkraftmaschine insbesondere eines Kraftfahrzeugs sowie eine Brennkraftmaschine insbesondere für ein Kraftfahrzeug.

Ein derartiges Verfahren, ein derartiges Steuergerät und eine derartige Brennkraftmaschine sind beispielsweise bei einer sogenannten Benzin-Direkteinspritzung bekannt. Dort wird der Kraftstoff in einem Homogenbetrieb während der Ansaugphase oder in einem Schichtbetrieb während der Verdichtungsphase in den Brennraum der Brennkraftmaschine eingespritzt. Der Homogenbetrieb ist vorzugsweise für den Vollastbetrieb der Brennkraftmaschine vorgesehen, während der Schichtbetrieb für den Leerlauf- und Teillastbetrieb geeignet ist. Beispielsweise in Abhängigkeit von dem angeforderten Drehmoment wird bei einer derartigen direkteinspritzenden Brennkraftmaschine zwischen den genannten Betriebsarten umgeschaltet.

Im Schichtbetrieb wird der Einspritzzeitpunkt und der Zündzeitpunkt für den einzuspritzenden Kraftstoff in Abhängigkeit von der Drehzahl der Brennkraftmaschine und der einzuspritzenden Kraftstoffmasse ermittelt. Das Kraftstoff/Luft-Verhältnis, also Lambda, wird gegebenenfalls in Abhängigkeit von einer Abgasrückführung und/oder einer Bremsunterdruckregelung oder dergleichen beeinflußt. Derartige Veränderungen von Lambda können zu einem erhöhten Kraftstoffverbrauch und/oder einer erhöhten Rußentwicklung führen.

Aufgabe der Erfindung ist es, ein Verfahren zum Betreiben einer Brennkraftmaschine zu schaffen, mit dem ein möglichst geringer Kraftstoffverbrauch bei gleichzeitig möglichst geringer Rußentwicklung erreichbar ist.

Diese Aufgabe wird bei einem Verfahren der eingangs genannten Art erfindungsgemäß dadurch gelöst, daß in der zweiten Betriebsart der Einspritzzeitpunkt und/oder der Zündzeitpunkt in Abhängigkeit von Lambda ermittelt wird. Bei einem Steuergerät und einer Brennkraftmaschine der jeweils eingangs genannten Art wird die Aufgabe entsprechend gelöst.

Durch die Berücksichtigung von Lambda bei der Ermittlung des Einspritzzeitpunkts und/oder des Zündzeitpunkts wird gewährleistet, daß mögliche negative Auswirkungen von Veränderungen des Kraftstoff/Luft-Verhältnisses auf den Kraftstoffverbrauch und/oder die Rußentwicklung wieder kompensiert werden können. Es ist damit möglich, die Brennkraftmaschine in einem optimalen Bereich bezüglich des Kraftstoffverbrauchs und der Rußentwicklung zu betreiben.

Besonders vorteilhaft ist die Erfindung bei Umschaltvorgängen zwischen der ersten und der zweiten Betriebsart. Die Erfindung sorgt in diesen Fällen dafür, daß der Kraftstoffverbrauch und/oder die Rußentwicklung während der Umschaltung möglichst optimal bleiben.

Bei einer vorteilhaften Ausgestaltung der Erfindung wird in der zweiten Betriebsart der Einspritzzeitpunkt und/oder der Zündzeitpunkt bei sinkendem Lambda von spät nach früh verändert. Es hat sich gezeigt, daß dadurch weitestgehend ein minimaler Kraftstoffverbrauch bei gleichzeitig minimaler Rußentwickelung und damit ein optimaler Betrieb der Brennkraftmaschine erreichbar ist.

Besonders vorteilhaft ist es, wenn Lambda aus anderen Betriebsgrößen der Brennkraftmaschine abgeleitet wird, beispielsweise aus einem Saugrohrdruck und/oder aus einer angesaugten Luftmasse und/oder dergleichen. Auf diese Weise kann die Ermittlung des Zündzeitpunkts und/oder des Einspritzzeitpunkts in Abhängigkeit von Lambda vereinfacht werden.

Bei einer vorteilhaften Weiterbildung der Erfindung wird ein von Lambda oder vom Saugrohrdruck abhängiger Gewichtungsfaktor ermittelt, es werden die Zündzeitpunkte und/oder die Einspritzzeitpunkte in verschiedenen Betriebszuständen der Brennkraftmaschine ermittelt, und es werden diese Zündzeitpunkte und/oder Einspritzzeitpunkte mit dem Gewichtungsfaktor verknüpft. Dabei werden Differenzen zwischen den Zündzeitpunkten und/oder den Einspritzzeitpunkten der verschiedenen Betriebszustände ermittelt, die dann mit dem Gewichtungsfaktor multipliziert werden.

Besonders vorteilhaft ist es, wenn die Zündzeitpunkte und/oder die Einspritzzeitpunkte in einem ungedrosselten und einem gedrosselten Betriebszustand der Brennkraftmaschine ermittelt werden. Diese beiden Betriebszustände repräsentieren zwei Extremwerte für Lambda, mit denen über den vorgenannten Gewichtungsfaktor besonders einfach eine Abhängigkeit der Ermittlung des Zündzeitpunkts und/oder des Einspritzzeitpunkts von Lambda erreichbar ist.

Von besonderer Bedeutung ist die Realisierung des erfindungsgemäßen Verfahrens in der Form eines Steuerelements, das für ein Steuergerät einer Brennkraftmaschine, insbesondere eines Kraftfahrzeugs, vorgesehen ist. Dabei ist auf dem Steuerelement ein Programm abgespeichert, das auf einem Rechengerät, insbesondere auf einem Mikroprozessor, ablauf fähig und zur Ausführung des erfindungsgemäßen Verfahrens geeignet ist. In diesem Fall wird also die Erfindung durch ein auf dem Steuerelement abgespeichertes Programm realisiert, so daß dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory oder ein Flash-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: zeigt eine schematische Darstellung eines Ausführungsbeispiels einer erfindungsgemäßen Brennkraftmaschine,
- Figuren 2a und 2b: zeigen schematische Diagramme von über Lambda aufgetragenen Betriebsgrößen der Brennkraftmaschine der Figur 1,
- Figur 3: zeigt ein schematischs Blockdiagramm eines Ausführungsbeispiels eines erfindungsgemäßen Verfahrens zum Betreiben der Brennkraftmaschine der Figur 1, und
- Figur 4: zeigt ein schematisches Digramm einer Kennlinie der Figur 3.

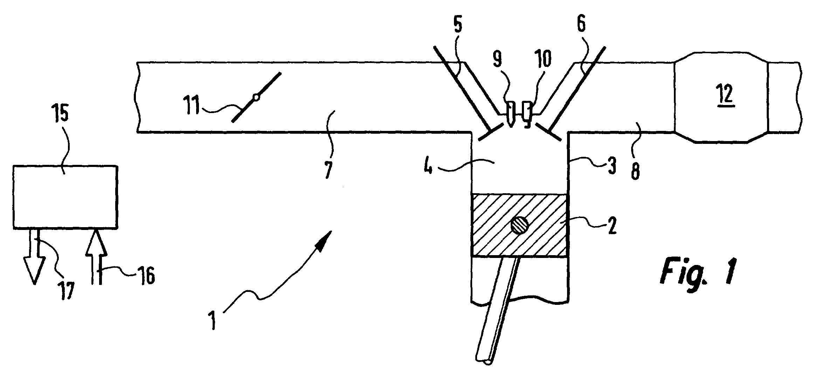

In der Figur 1 ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlaßventil 5 und ein Auslaßventil 6 begrenzt ist. Mit dem Einlaßventil 5 ist ein Ansaugrohr 7 und mit dem Auslaßventil 6 ist ein Abgasrohr 8 gekoppelt.

Im Bereich des Einlaßventils 5 und des Auslaßventils 6 ragen ein Einspritzventil 9 und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der der Reinigung der durch die Verbrennung des Kraftstoffs entstehenden Abgase dient.

Der Kolben 2 wird durch die Verbrennung des Kraftstoffs in dem Brennraum 4 in eine Hin- und Herbewegung versetzt, die auf eine nicht-dargestellte Kurbelwelle übertragen wird und auf diese ein Drehmoment ausübt.

Ein Steuergerät 15 ist von Eingangssignalen 16 beaufschlagt, die mittels Sensoren gemessene Betriebsgrößen der Brennkraftmaschine 1 darstellen. Beispielsweise ist das Steuergerät 15 mit einem Luftmassensensor, einem Lambda-Sensor, einem Drehzahlsensor und dergleichen verbunden. Des weiteren ist das Steuergerät 15 mit einem Fahrpedalsensor verbunden, der ein Signal erzeugt, das die Stellung eines von einem Fahrer betätigbaren Fahrpedals und damit das angeforderte Drehmoment angibt. Das Steuergerät 15 erzeugt Ausgangssignale 17, mit denen über Aktoren bzw. Steller das verhalten der Brennkraftmaschine 1 beeinflußt werden kann. Beispielsweise ist das Steuergerät 15 mit dem Einspritzventil 9, der Zündkerze 10 und der Drosselklappe 11 und dergleichen verbunden und erzeugt die zu deren Ansteuerung erforderlichen Signale.

Unter anderem ist das Steuergerät 15 dazu vorgesehen, die Betriebsgrößen der Brennkraftmaschine 1 zu steuern und/oder zu regeln. Beispielsweise wird die von dem Einspritzventil 9 in den Brennraum 4 eingespritzte Kraftstoffmasse von dem Steuergerät 15 insbesondere im Hinblick auf einen geringen Kraftstoffverbrauch und/oder eine geringe Schadstoffentwicklung gesteuert und/oder geregelt. Zu diesem Zweck ist das Steuergerät 15 mit einem Mikroprozessor versehen, der in einem Speichermedium, insbesondere in einem Flash-Memory ein Programm abgespeichert hat, das dazu geeignet ist, die genannte Steuerung und/oder Regelung durchzuführen.

In einer ersten Betriebsart, einem sogenannten Homogenbetrieb der Brennkraftmaschine 1, wird die Drosselklappe 11 in Abhängigkeit von dem erwünschten Drehmoment teilweise geöffnet bzw. geschlossen. Der Kraftstoff wird von dem Einspritzventil 9 während einer durch den Kolben 2 hervorgerufenen Ansaugphase in den Brennraum 4 eingespritzt. Durch die gleichzeitig über die Drosselklappe 11 angesaugte Luft wird der eingespritzte Kraftstoff verwirbelt und damit in dem Brennraum 4 im wesentlichen gleichmäßig verteilt. Danach wird das Kraftstoff/Luft-Gemisch während der Verdichtungsphase verdichtet, um dann von der Zündkerze 10 entzündet zu werden. Durch die Ausdehnung des entzündeten Kraftstoffs wird der Kolben 2 angetrieben. Das entstehende Drehmoment hängt im Homogenbetrieb unter anderem von der Stellung der Drosselklappe 11 ab. Im Hinblick auf eine geringe Schadstoffentwicklung wird das Kraftstoff/Luft-Gemisch möglichst auf Lambda gleich Eins eingestellt.

In einer zweiten Betriebsart, einem sogenannten Schichtbetrieb der Brennkraftmaschine 1, wird die Drosselklappe 11 weit geöffnet. Der Kraftstoff wird von dem Einspritzventil 9 während einer durch den Kolben 2 hervorgerufenen Verdichtungsphase in den Brennraum 4 eingespritzt, und zwar örtlich in die unmittelbare Umgebung der Zündkerze 10 sowie zeitlich in geeignetem Abstand vor dem Zündzeitpunkt. Dann wird mit Hilfe der Zündkerze 10 der Kraftstoff entzündet, so daß der Kolben 2 in der nunmehr folgenden Arbeitsphase durch die Ausdehnung des entzündeten Kraftstoffs angetrieben wird. Das entstehende Drehmoment hängt im Schichtbetrieb weitgehend von der eingespritzten Kraftstoffmasse ab. Im wesentlichen ist der Schichtbetrieb für den Leerlaufbetrieb und den Teillastbetrieb der Brennkraftmaschine 1 vorgesehen.

Für einen geringen Kraftstoffverbrauch und eine geringe Schadstoffentwicklung sind der Einspritzzeitpunkt und der Zündzeitpunkt des eingespritzten Kraftstoffs wesentlich. Unter dem Einspritzzeitpunkt wird nachfolgend ein Einspritzbeginn ESB verstanden, bei dem das Einspritzventil 10 geöffnet wird, und dem eine Einspritzdauer bis zu einem Einspritzende folgt. Unter dem Zündzeitpunkt wird nachfolgend der Zündwinkel ZW verstanden, bei dem die Zündkerze 9 gezündet wird.

Der Einspritzbeginn ESB und der Zündwinkel ZW werden unter anderem in Abhängigkeit von der Drehzahl der Brennkraftmaschine 1 und in Abhängigkeit von der in den Brennraum 4 einzuspritzenden Kraftstoffmasse für jede Einspritzung von dem Steuergerät 15 ermittelt.

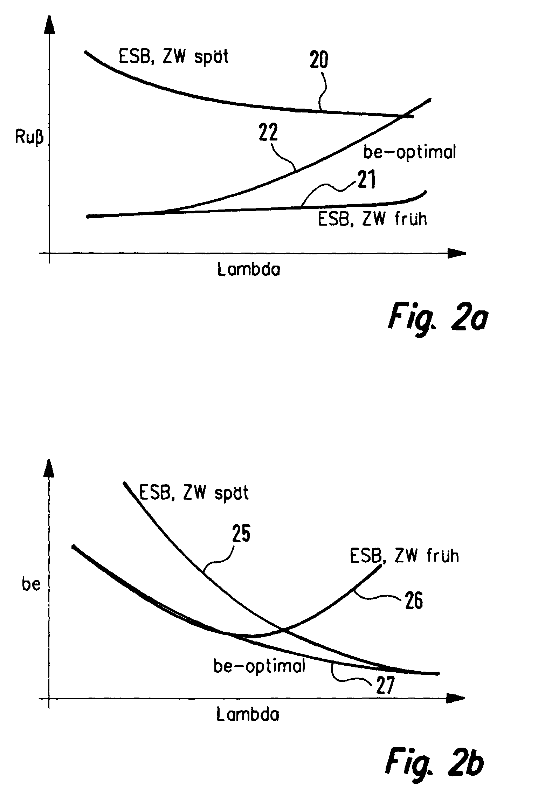

In dem Diagramm der Figur 2a ist die Rußentwicklung der Brennkraftmaschine 1 in der zweiten Betriebsart über Lambda aufgetragen. In der Figur 2a ist eine Kurve 20 aufgetragen, die den Verlauf der Rußentwicklung über Lambda bei einem späten Einspritzbeginn ESB und einem späten Zündwinkel ZW darstellt. Die Rußentwicklung befindet sich dort auf einem hohen Niveau und steigt mit fallendem Lambda an. Ebenfalls ist eine Kurve 21 aufgetragen, die den Verlauf der Rußentwicklung über Lambda bei einem frühen Einspritzbeginn ESB und einem frühen Zündwinkel ZW darstellt. Die Rußentwicklung bleibt dort im wesentlichen auf einem niedrigen Niveau. Des weiteren ist eine Kurve 22 aufgetragen, die mit be-optimal gekennzeichnet ist, und die damit denjenigen Zusammenhang zwischen Lambda und der Rußenticklung angibt, bei dem der effektive Kraftstoffverbrauch be der Brennkraftmaschine 1 optimal ist. Dieser Kraftstoffverbrauch be fällt mit fallendem Lamda.

Insgesamt kann der Figur 2a entnommen werden, daß es für eine möglichst geringe Rußentwicklung vorteilhaft ist, den Einspritzbeginn ESB und den Zündwinkel ZW mit fallendem Lambda von spät nach früh zu verstellen. Durch diese Veränderung des Einspritzbeginns ESB und des Zündwinkels ZW in Abhängigkeit von Lambda ist es möglich, daß die Brennkraftmaschine 1 entsprechend der Kurve 22 betrieben wird.

In dem Diagramm der Figur 2b ist der effektive Kraftstoffverbrauch be der Brennkraftmaschine 1 in der zweiten Betriebsart über Lambda aufgetragen. In der Figur 2b ist eine Kurve 25 aufgetragen, die den Verlauf des Kraftstoffverbrauchs be über Lambda bei einem späten Einspritzbeginn ESB und einem späten Zündwinkel ZW darstellt. Der Kraftstoffverbrauch be steigt dort mit fallendem Lambda stark an. Ebenfalls ist eine Kurve 26 aufgetragen, die den Verlauf des Kraftstoffverbrauchs be über Lambda bei einem frühen Einspritzbeginn ESB und einem frühen Zündwinkel ZW darstellt. Der Kraftstoffverbrauch be wird dort bei fallendem Lambda zuerst geringer und dann wieder größer. Des weiteren ist eine Kurve 27 aufgetragen, die mit be-optimal gekennzeichnet ist, und bei der der effektive Kraftstoffverbrauch be der Brennkraftmaschine 1 optimal ist. Dieser Kraftstoffverbrauch be steigt mit fallendem Lambda langsam an.

Insgesamt kann der Figur 2b entnommen werden, daß es für eine möglichst geringen Kraftstoffverbrauch be vorteilhaft ist, den Einspritzbeginn ESB und den Zündwinkel ZW mit fallendem Lambda von spät nach früh zu verstellen. Durch diese Veränderung des Einspritzbeginns ESB und des Zündwinkels ZW in Abhängigkeit von Lambda ist es möglich, daß die Brennkraftmaschine 1 entsprechend der Kurve 27 betrieben wird.

Eine gemeinsame Betrachtung der Diagramme der Figuren 2a und 2b ergibt folgendes:

Wird der Eispritzbeginn ESB und der Zündwinkel ZW bei fallendem bzw. sinkendem Lambda von spät nach früh verstellt, so wird dadurch einerseits die Rußentwicklung verringert und es wird andererseits der Kraftstoffverbrauch be optimiert.

Bei der Steuerung und/oder Regelung der Brennkraftmaschine 1 durch das Steuergerät 15 wird deshalb der Einspritzbeginn ESB und/oder der Zündwinkel ZW in Abhängigkeit von Lambda ermittelt. Insbesondere wird der Einspritzbeginn ESB und/oder der Zündwinkel ZW derart ermittelt, daß dieselben bei sinkendem Lambda von spät nach früh verstellt werden.

Lambda, also das Kraftstoff/Luft-Verhältnis des dem Brennraum 4 zugeführten Gemischs, kann unmittelbar oder auch mit Hilfe von oder durch andere Betriebsgrößen der Brennkraftmaschine 1 ermittelt oder ersetzt werden. So kann anstelle von Lambda auch der Saugrohrdruck ps oder die Luftmasse der angesaugten Luft oder der Drosselklappenwinkel oder dergleichen verwendet werden.

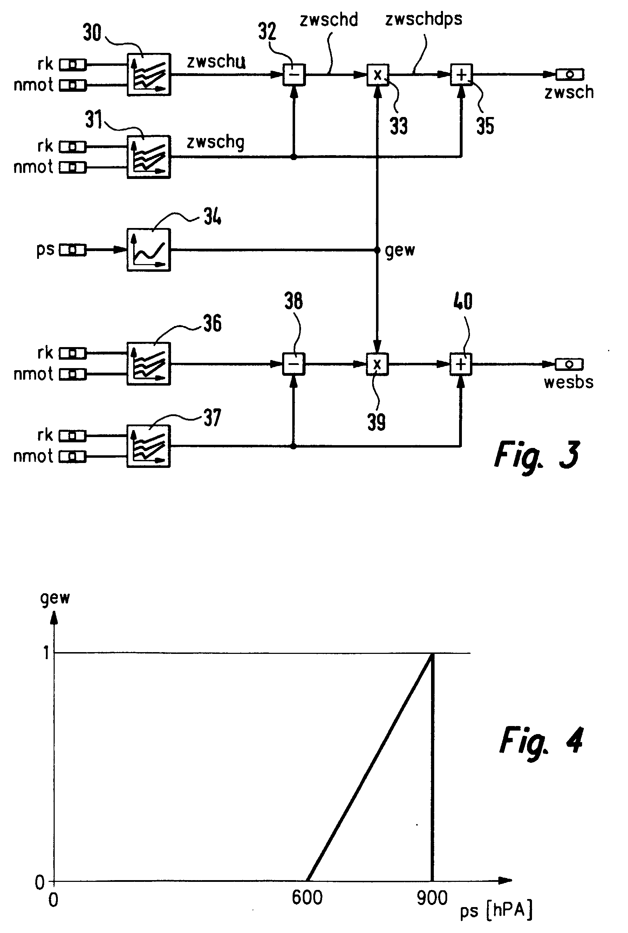

In der Figur 3 ist ein Verfahren dargestellt, mit dem derEinspritzbeginn ESB und der Zündwinkel ZW unter anderem in Abhängigkeit von Lambda ermittelt werden kann. Anstelle von Lambda wird bei dem Verfahren der Saugrohrdruck ps verwendet.

In der Figur 3 sind zwei Kennfelder 30, 31 dargestellt, denen als Eingangssignale jeweils die Drehzahl nmot der Brennkraftmaschine 1 und die in den Brennraum 4 einzuspritzende Kraftstoffmasse rk zugeführt ist. Das Kennfeld 30 erzeugt daraus ein Ausgangssignal zwschu und das Kennfeld 31 ein Ausgangssignal zwschg.

In dem Kennfeld 30 ist für die zweite Betriebsart, also für den Schichtbetrieb, der Zusammenhang zwischen dem Zündwinkel einerseits und der Drehzahl nmot und der Kraftstoffmasse rk andererseits abgelegt, und zwar unter der Voraussetzung einer ungedrosselten Brennkraftmaschine 1, also wenn die Drosselklappe 11 vollständig geöffnet ist, und wenn damit der Saugrohrdruck PS etwa dem Umgebungsdruck und damit etwa 900 hPa entspricht.

In dem Kennfeld 31 ist für die zweite Betriebsart der Zusammenhang zwischen dem Zündwinkel einerseits und der Drehzahl nmot und der Kraftstoffmasse rk andererseits abgelegt, und zwar unter der Voraussetzung einer gedrosselten Brennkraftmaschine 1, also wenn die Drosselklappe 11 nicht vollständig geöffnet, sondern zumindest teilweise geschlossen ist, und wenn damit der Saugrohrdruck ps geringer als der Umgebungsdruck ist, z.B. etwa 900 hPa.

Die Signale zwschu und zwschg sind einem Subtraktionsblock 32 zugeführt, der als Ausgangssignal die Differenz zwschd der beiden genannten Signale erzeugt. Diese Differenz zwschd wird einem Multiplikationsblock 33 zugeführt, mit dem eine Gewichtung der Differenz zwschd durchgeführt wird.

Der Saugrohrdruck ps ist gemäß der Figur 3 einer Kennlinie 34 als Eingangssignal zugeführt. Der Verlauf der Kennlinie 34 ist in der Figur 4 dargestellt. Das Ausgangssignal der Kennlinie 34 stellt einen Gewichtungsfaktor gew dar. Danach ist der Gewichtungsfaktor gew der Kennlinie 34 gleich Null, solange der Saugrohrdruck ps gleich oder kleiner ist als 600 hPa, solange also die Brennkraftmaschine 1 gedrosselt betrieben wird. Ist der Saugrohrdruck ps größer als 600 hPa, so steigt der Gewichtungsfaktor gew linear von Null auf Eins an. Bei einem Saugrohrdruck ps, der gleich oder größer ist als 900 hPa, also bei ungedrosselter Brennkraftmaschine 1, ist der Gewichtungsfaktor gew gleich Eins.

Die Differenz zwschd der beiden von den Kennfeldern 30 und 31 ausgegebenen Zündwinkel zwschu und zwschg wird durch den Multiplikationsblock 33 mit dem Gewichtungsfaktor gew gewichtet. Damit entsteht als Ausgangssignal eine Differenz zwschdps, die über die Kennlinie 34 abhängig ist von dem Saugrohrdruck ps. Damit ist diese Differenz zwschdps auch abhängig von Lambda.

Die Differenz zwschdps wird in einem Additionsblock 35 zu dem Signal zwschg, also zu dem von dem Kennfeld 31 für den gedrosselten Betriebszustand ausgegebenen Zündwinkel hinzuaddiert. Als Ausgangssignal des Additionsblocks 35 steht dann der für die nächste Einspritzung im Schichtbetrieb einzustellende Zündwinkel zwsch zur Verfügung.

In entsprechender Weise wird gemäß der Figur 3 auch der für die nächste Einspritzung im Schichtbetrieb einzustellende Einspritzbeginn in der Form eines Einspritzbeginnwinkels wesbs ermittelt. Hierzu sind zwei Kennfelder 36, 37 vorgesehen, die jeweils von der Drehzahl nmot und der Kraftstoffmasse rk abhängig sind. Das Kennfeld 36 bezieht sich auf die ungedrosselte, und das Kennfeld 37 auf die gedrosselte Brennkraftmaschine 1. Mit Hilfe eines Subtraktionsblocks 38, eines Multiplikationsblocks 39 und eines Additionsblocks 40 wird die Differenz der Ausgangssignale der beiden Kennfelder 36, 37 mit dem Gewichtungsfaktor gew gewichtet, um danach zu dem Ausgangssignal des Kennfelds 37 hinzuaddiert zu werden. Daraus entsteht dann der einzustellende Einspritzbeginnwinkel wesbs für den Schichtbetrieb.

Insgesamt ermöglicht das Verfahren nach der Figur 3 im Schichtbetrieb eine Ermittlung des Zündwinkels zwsch und des Einspritzbeginnwinkels wesbs in Abhängigkeit von der Drehzahl nmot und der Kraftstoffmasse rk sowie in Abhängigkeit von dem Saugrohrdruck ps und damit in Abhängigkeit von Lambda.

Bei fallendem Saugrohrdruck ps und damit bei fallendem Lambda wird der Gewichtungsfaktor gew immer kleiner, so daß auch die aus der ungedrosselten und der gedrosselten Brennkraftmaschine 1 abgeleiteten Differenzen des Zündwinkels bzw. des Einspritzbeginnwinkels immer kleiner werden. Dies hat zur Folge, daß der Zündwinkel zwsch und der Einspritzbeginnwinkel wesbs mit fallendem Saugrohrdruck ps immer kleiner werden und sich damit von spät nach früh verändern.

## Patentansprüche

1. Verfahren zum Betreiben einer Brennkraftmaschine (1) insbesondere eines Kraftfahrzeugs, bei dem Kraftstoff in einer ersten Betriebsart während einer Ansaugphase oder in einer zweiten Betriebsart während einer Verdichtungsphase direkt in einen Brennraum (4) eingespritzt und entzündet wird, und bei dem der Einspritzzeitpunkt (ESB) und/oder der Zündzeitpunkt (ZW) des Kraftstoffs in der zweiten Betriebsart in Abhängigkeit von der Drehzahl (nmot) der Brennkraftmaschine (1) und der in den Brennraum (4) einzuspritzenden Kraftstoffmasse (rk) ermittelt wird, dadurch gekennzeichnet, daß in der zweiten Betriebsart der Einspritzzeitpunkt (wesbs) und/oder der Zündzeitpunkt (zwsch) in Abhängigkeit von Lambda ermittelt wird.

2. Verfahren nach Anspruch 1, dadurch gekennzeichnet, daß in der zweiten Betriebsart der Einspritzzeitpunkt (wesbs) und/oder der Zündzeitpunkt (zwsch) bei sinkendem Lambda von spät nach früh verändert wird.

3. Verfahren nach einem der Ansprüche 1 oder 2, dadurch gekennzeichnet, daß Lambda aus anderen Betriebsgrößen der Brennkraftmaschine (1) abgeleitet wird, beispielsweise aus einem Saugrohrdruck (ps) und/oder aus einer angesaugten Luftmasse und/oder dergleichen.

4. Verfahren nach einem der Ansprüche 1 bis 3, dadurch gekennzeichnet, daß ein von Lambda oder vom Saugrohrdruck (ps) abhängiger Gewichtungsfaktor (gew) ermittelt wird, daß die Zündzeitpunkte (zwschu, zwschg) und/oder die Einspritzzeitpunkte in verschiedenen Betriebszuständen der Brennkraftmaschine ermittelt werden, und daß diese Zündzeitpunkte (zwschu, zwschg) und/oder Einspritzzeitpunkte mit dem Gewichtungsfaktor (gew) verknüpft werden.

5. Verfahren nach Anspruch 4, dadurch gekennzeichnet, daß Differenzen (zwschd) zwischen den Zündzeitpunkten (zwschu, zwschg) und/oder den Einspritzzeitpunkten der verschiedenen Betriebszustände ermittelt werden, die dann mit dem Gewichtungsfaktor (gew) multipliziert werden.

6. Verfahren nach einem der Ansprüche 4 oder 5, dadurch gekennzeichnet, daß die Zündzeitpunkte (zwschu, zwschg) und/oder die Einspritzzeitpunkte in einem ungedrosselten und einem gedrosselten Betriebszustand der Brennkraftmaschine (1) ermittelt werden.

7. Steuerelelement, insbesondere Flash-Memory, für ein Steuergerät (15) einer Brennkraftmaschine (1) insbesondere eines Kraftfahrzeugs, auf dem ein Programm abgespeichert ist, das auf einem Rechengerät, insbesondere auf einem Mikroprozessor, ablauf fähig und zur Ausführung eines Verfahrens nach einem der Ansprüche 1 bis 6 geeignet ist.

8. Steuergerät (15) für eine Brennkraftmaschine (1) insbesondere eines Kraftfahrzeugs, wobei die Brennkraftmaschine (1) einen Brennraum (4) aufweist, in den Kraftstoff in einer ersten Betriebsart während einer Ansaugphase oder in einer zweiten Betriebsart während einer Verdichtungsphase direkt einspritzbar und entzündbar ist, und wobei durch das Steuergerät (15) der Einspritzzeitpunkt (ESB) und/oder der Zündzeitpunkt (ZW) des Kraftstoffs in der zweiten Betriebsart in Abhängigkeit von der Drehzahl (nmot) der Brennkraftmaschine (1) und der in den Brennraum (4) einzuspritzenden Kraftstoffmasse (rk) ermittelbar ist, dadurch gekennzeichnet, daß durch das Steuergerät (15) in der zweiten Betriebsart der Einspritzzeitpunkt (wesbs) und/oder der Zündzeitpunkt (zwsch) in Abhängigkeit von Lambda ermittelbar ist.

9. Brennkraftmaschine (1) insbesondere für ein Kraftfahrzeug mit einem Brennraum (4), in den Kraftstoff in einer ersten Betriebsart während einer Ansaugphase oder in einer zweiten Betriebsart während einer Verdichtungsphase direkt einspritzbar und entzündbar ist, und mit einem Steuergerät (15) zur Ermittlung des Einspritzzeitpunkts (ESB) und/oder der Zündzeitpunkts (ZW) des Kraftstoffs in der zweiten Betriebsart in Abhängigkeit von der Drehzahl (nmot) der Brennkraftmaschine (1) und der in den Brennraum (4) einzuspritzenden Kraftstoffmasse (rk), dadurch gekennzeichnet, daß durch das Steuergerät (15) in der zweiten Betriebsart der Einspritzzeitpunkt (wesbs) und/oder der Zündzeitpunkt (zwsch) in Abhängigkeit von Lambda ermittelbar ist.
